# EUROPÄISCHE PATENTSCHRIFT

(11) **EP 1 676 148 B1**
(45) Veröffentlichungstag und Bekanntmachung des Hinweises auf die Patenterteilung: **26.11.2008**
(21) Anmeldenummer: 04802633.0
(22) Anmeldetag: 21.10.2004
(51) Int. Cl.: G01S 7/495, G01S 7/481, F41G 7/22

(54) **SYSTEM UND VERFAHREN ZUM SCHUTZ VON TRANSPORTMITTELN GEGEN IR-GELENKTE FLUGKÖRPER**
SYSTEM AND METHOD FOR PROTECTING MEANS OF TRANSPORT FROM IR-GUIDED MISSILES
SYSTEME ET PROCEDE POUR PROTEGER DES MOYENS DE TRANSPORT CONTRE DES OBJETS VOLANTS GUIDES PAR RAYONS INFRAROUGES

(30) Priorität: 25.10.2003 DE 10349869
(43) Veröffentlichungstag der Anmeldung: 05.07.2006
(73) Patentinhaber: EADS Deutschland GmbH, 85521 Ottobrunn (DE)
(72) Erfinder: THUM-JÄGER, Andrea, 85375 Neufahrn (DE); MOLOCHER, Bernhard, 85461 Bockhorn (DE); PROTZ, Rudolf, 85635 Höhenkirchen (DE); ACKERMANN, Rainer, 86153 Augsburg (DE)
(74) Vertreter: Meel, Thomas
(86) Internationale Anmeldenummer: PCT/DE2004/002345
(87) Internationale Veröffentlichungsnummer: WO 2005/045465

(56) Entgegenhaltungen:
- EP-A- 0 844 495
- WO-A-01/42083
- DE-A- 19 938 398
- DE-A1- 19 745 785
- US-A- 5 600 434
- US-A- 5 662 291
- US-A- 5 742 384
- US-A- 5 909 296
- US-A1- 2002 097 390
- MCMANAMON P F ET AL: "Suggestions for low cost multifunction sensing" AEROSPACE CONFERENCE, 1998 IEEE SNOWMASS AT ASPEN, CO, USA 21-28 MARCH 1998, NEW YORK, NY, USA,IEEE, US, Bd. 1, 21. März 1998 (1998-03-21), Seiten 283-307, XP010287019 ISBN: 0-7803-4311-5

## Beschreibung

Die Erfindung betrifft ein System und ein Verfahren zum Schutz von Transportmitteln gegen IR-gelenkte Flugkörper gemäß den Oberbegriffen der Patentansprüche 1 und 12.

Aus dem Stand der Technik sind Waffensysteme mit Flugkörperwarngeräten zur Selbstverteidigung von Flugzeugen bekannt, welche Flugkörper mit IR-Suchköpfen dadurch bekämpfen, dass sie die so gut wie möglich gebündelte, breitbandige IR-Strahlung von Lampen oder bei DIRCM (directional infrared countermeasures)- Waffensystemen schmalbandige IR-Laserstrahlung auf den Suchkopf des angreifenden Flugkörpers richten. Ein derartiges DIRCM-Waffensystem ist z.B. aus DE 197 45 785 bekannt.

Ein Nachteil der Waffensysteme bei denen mittels Lampen IR-Strahlung auf die angreifenden Flugkörper gerichtet wird, ist das hohe Gewicht sowie das große Volumen des Systems. Weitere Nachteile sind die durch ein niedriges Stör-zu-Signal-Verhältnis bedingte geringe Effizienz des Systems sowie der hohe Leistungsverbrauch. Bei den Laser-DIRCM-Waffensystemen werden üblicherweise sogenannte Tracker zur Verfolgung der angreifenden Flugkörper benötigt, wodurch der Aufbau des Systems aufwendig wird.

Weitere Waffensysteme basieren auf dem Prinzip des Auswurfs von Täuschkörpern, sogenannten Flares. Als nachteilig erweist sich hierbei, dass die Handhabung explosiver Materialien in einem Flugzeug, insbesondere bei einem Verkehrsflugzeug, sehr gefährlich ist. Außerdem besteht beim Auswurf von Flares in geringer Flughöhe eine erhöhte Brandgefahr der darunterliegenden Umgebung, z.B. Felder, Wälder. McManamon et al: "Suggestions for Low Cost Multifunction Sensing", Aerospace Conference, 1998 IEEE Snowmass at Aspen, CO, USA 21-28 march 1998, New York, NY, USA, IEEE, US, vol.1, 21 March 1998, pages 283-307 beschreibt ein System zur Anbringung an Flugzeuge, welches in der Lage ist Bedrohungen zu erkennen und Gegenmaßnahmen mittels IRCM (infrared countermeasure) durchzuführen.

US 5,909,296 und Die 199 38 398 A1 beschreiben jeweils die Anordnung eines Laserarrays zur Vergrößerung des Wirkfeldes des Laserarrays. US 5,909,296 offenbart dabei die Anordnung eines Laserarrays auf einer gekrümmten Oberfläche.

Aus US 2002/0097390 A1 ist ein System zum Erkennungen von Bedrohungen und Ausführen von Gegenmaßnahmen bekannt. Hierbei ist eine schwenkbare Anordnung mit einem Infrarotempfänger und einem Infrarotlaser vorgesehen, welche den Empfänger und den Laser auf die jeweilige Bedrohung ausrichtet.

Es ist Aufgabe der Erfindung ein System zu schaffen, welches bei kompakter und einfacher Bauweise höchst effektiv bei der Abwehr von angreifenden Flugkörpern ist.

Diese Aufgabe wird durch das System mit den Merkmalen gemäß Patentanspruch 1 gelöst. Vorteilhafte Ausführungen des erfindungsgemäßen Systems sind Gegenstand von Unteransprüchen.

Das erfindungsgemäße System zeichnet sich dadurch aus, dass das Mittel zum Stören der IR-gelenkten Flugkörper ein Laserarray umfassend eine Anzahl von Laserdioden ist, welches auf einer gekrümmten Oberfläche angeordnet ist. Das erfindungsgemäße System zeichnet sich ferner dadurch aus, dass in vorgebbare Rauchrichtungen ausgerichtete Flugkörperwarngeräte vorhanden sind. Üblicherweise umfasst das Laserdiodenarray einige hundert Laserdioden. Ein Vorteil hierbei ist die kompakte und einfache Bauweise, wodurch das System einfach an z.B. ein Flugzeug, ein Bodenfahrzeug oder ein Schiff angebracht werden kann. Da Laserdioden wesentlich kleiner sind, als herkömmliche Laser oder Lampen, ist es möglich, nicht nur Laserdiodenarrays auf ebenen Oberflächen, sondern erfindungsgemäß auch auf gekrümmten Oberflächen aufzubauen. Dadurch wird der Wirkungsradius des Arrays wesentlich vergrößert, was zu einer Verbesserung der Effektivität des Waffensystems führt.

Die Laserdioden, arbeiten vorteilhaft mit einer Wellenlänge im Bereich von 2-5 µm, wobei zweckmäßig Laserdioden mit einer Ausgangsleistung von 1 KW/cm² bei einer Temperatur von 300K verwendet werden.

Selbstverständlich ist es möglich, die Laserdioden in ihrem Wellenlängenbereich aufzuteilen. So kann z.B. vorgesehen werden, dass ein erster Teil der Laserdioden einen Wellenlängenbereich von 2-3,5 µm und ein zweiter Teil der Laserdioden den Wellenlängenbereich von 3,5-5 µm abdeckt. Die beiden Typen der Laserdioden können dabei beliebig oder nach einem vorgebbaren Muster auf dem Laserdiodenarray angeordnet sein.

In weiteren vorteilhaften Ausführungen der Erfindung umfaßt das Laserarray diodengepumpte Halbleiterlaser oder diodengepumpte Scheibenlaser oder diodengepumpte Halbleiterscheibenlaser. Selbstverständlich ist es möglich, ein Laserarray aus einer Kombination der genannten Laser aufzubauen.

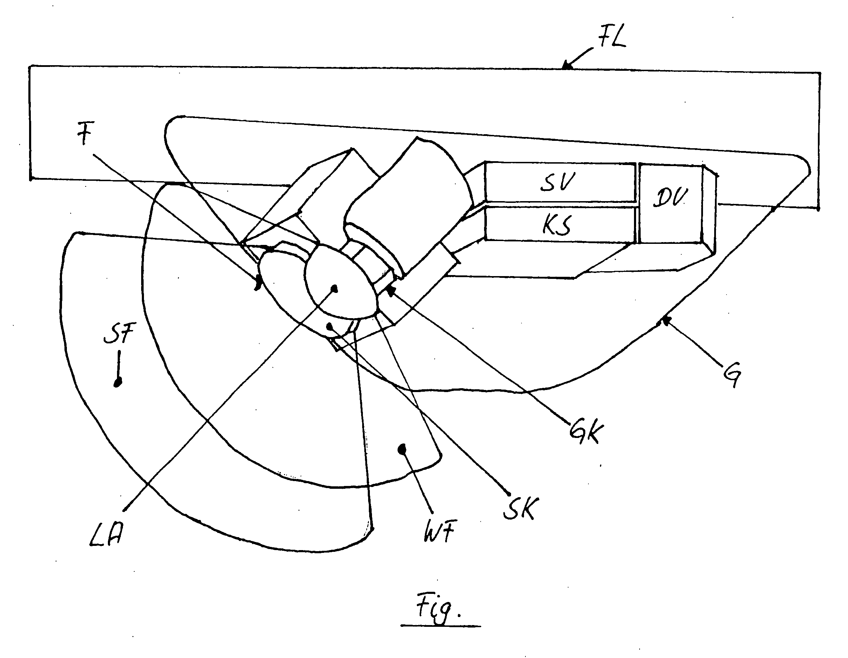

Die einzige Figur zeigt das erfindungsgemäße System in einer beispielhaften Prinzipdargestellung. Mit dem Bezugszeichen G ist das Gehäuse bezeichnet, welches die Systemkomponenten, insbesondere das Flugkörperwarngerät F, das auf einem Gelenk GK angeordneten Laserarray LA, die Stromversorgungs-SV und Kühlungssysteme KS sowie der Datenverarbeitungseinheit DV umschließt. Ein weiteres, nicht dargestelltes System, welches sich im Gehäuse G befindet, ist ein Bildsensor zum Auslesen der Daten aus den Sensorköpfen SK des Flugkörperwarngeräts F. Zweckmäßig sind ferner an dem Gehäuse G Mittel (nicht dargestellt) vorhanden, mit denen das Gehäuse G an die Außenhaut eines Flugzeugs FL angebracht werden kann.

Das Flugkörperwarngerät F ist vorteilhaft in eine vorgebbare Raumrichtung ausgerichtet. Das Sichtfeld SF des Flugkörperwarngeräts F überstreicht dabei vorteilhaft einen Raumwinkel von 90°. Die Raumrichtung der Sichtlinie des Flugkörperwarngeräts richtet sich dabei insbesondere danach, an welcher Position des Flugzeugs das erfindungsgemäße System angebracht wird. So ist das Flugkörperwarngerät F in einem System, welches z.B. für den Einbau am Bug des Flugzeugs vorgesehen ist unter 45° zur Flugrichtung ausgerichtet. Das Flugkörperwarngerät F in einem System, welches z.B. für den Einbau an der Unterseite des Flugzeugs vorgesehen ist, ist vorzugsweise unter 90° zur Flugrichtung ausgerichtet. Somit wird gewährleistet, dass mit einer Anzahl von z.B. 4-6 Systemen die gesamte Umgebung eines Flugzeugs mit den Sensoren abgedeckt werden kann.

Vorteilhaft ist das Wirkungsfeld WF des Laserarray LA größer oder gleich dem Sichtfeld SF des Flugkörperwarngeräts F. Dadurch wird gewährleistet, dass sich die Wirkungsfelder WF mehrerer am Flugzeug angebrachter Systeme überdecken, wodurch eine höhere Effizienz der Abwehrmaßnahmen gewährleistet wird. Außerdem ist es somit möglich, mehrere im Sichtfeld SF des Flugkörperwarngeräts F detektierten und eventuell als Bedrohung identifizierten Objekte gleichzeitig zu stören.

Im weiteren wird eingehend auf den Betrieb eines erfindungsgemäßen Systems eingegangen.
Die Sensorköpfe SK des Flugkörperwarngerät F überstreichen ein Sichtfeld SF, in welchem das Signal eines sich nähernden Objekts (nicht dargestellt) erfaßt werden kann. Die Signale der Sensorköpfe SK des Flugkörperwarngeräts F werden von dem Bildsensor ausgelesen und zur Identifizierung und Verfolgung des detektierten Objekts weiterverarbeitet. Während der Signalauswertung durch den Bildsensor oder durch nicht dargestellte an den Bildsensor angeschlossene weitere Systeme erfolgt die Auswertung insbesondere des Abgasstrahls des sich nähernden Objekts unter Berücksichtigung vorgebbarer Parameter, z.B. Temperatur, Länge. Diese Informationen werden von dem erfindungsgemäßen System mit dem Verhalten einer angreifenden Rakete verglichen, wodurch eine Aussage getroffen werden kann, welche Bedrohung von dem anfliegenden Objekt gegen das zu schützende Flugzeug ausgeht.

Wird das sich nähernde Objekt als eine Bedrohung für das zu schützende Flugzeug eingestuft, wird ein Warnsignal an die Datenverarbeitungseinheit DV gesendet. Dieses Warnsignal umfaßt dabei zweckmäßig genaue Angaben des angreifenden Objekts, insbesondere der Höhe und der Azimutrichtung. Die Datenverarbeitungseinheit DV ist hierbei zweckmäßig ein taktischer Computer, welcher die Verfolgung (Tracking) des Objekts fortführt.
Selbstverständlich kann es vorkommen, dass die Sensorköpfe SK des Flugkörperwarngeräts F mehrere Objekte als Bedrohung identifizieren. In diesem Fall werden mehrere Warnsignale an die Datenverarbeitungseinheit DV gesendet, welche eventuelle Abwehrmaßnahmen bezüglich der Relevanz der Bedrohung sortiert.

Abhängig von den Warnsignalen berechnet die Datenverarbeitungseinheit DV die Richtung des abzuwehrenden Objekts. Die Sichtlinie des Laserarrays LA wird in diese Richtung ausgerichtet. Die Ausrichtung des Laserarrays LA erfolgt dabei vorteilhaft mittels des Gelenks GK auf das das Laserarray LA angeordnet ist. Zweckmäßig ist das Gelenk GK mit zwei Achsen (nicht dargestellt) gelagert. Dadurch wird gewährleistet, dass die Sichtlinie des Laserarrays LA schnell und zuverlässig in jede beliebige Raumrichtung ausgerichtet werden kann.

Zur Abwehr und Störung des angreifenden IR-gelenkten Objekts wird mit dem Laserarray LA ein Laserstrahl, insbesondere ein modulierter Laserstrahl in die vorgegebene Richtung ausgesendet.

Zur Verbesserung der Reaktionszeit des Systems zum Einleiten von Gegenmaßnahmen kann es vorteilhaft vorgesehen werden, dass die Sichtlinie des Laserarrays schon in Richtung eines detektierten Objekts ausgerichtet wird, bevor es eventuell als Bedrohung identifiziert wird.

## Patentansprüche

1. System zum Schutz von Transportmitteln (FL) gegen IR-gelenkte Flugkörper umfassend Flugkörperwarngeräte (F) und ein Mittel (LA) zum Stören der IR-gelenkten Flugkörper, wobei das Mittel (LA) ein Laserdiodenarray (LA) umfassend eine Anzahl von Laserdioden ist und mit dem Flugkörperwarngerät (F) gekoppelt ist,
**dadurch gekennzeichnet, dass**
das Laserdiodenarray (LA) auf einer gekrümmten Oberfläche auf einem mit mindestens zwei Achsen (A) gelagerten Gelenk (GK) angebracht ist und die Flugkörperwarngeräte (F) in vorgebbare Raumrichtungen ausgerichtet sind.

2. System nach Anspruch 1, **dadurch gekennzeichnet, dass** das Laserarray (LA) eine Anzahl von Laserdioden mit einer Wellenlänge im Bereich von 2-5 µm umfaßt.

3. System nach Anspruch 1, **dadurch gekennzeichnet, dass** das Laserarray (LA) eine Anzahl von diodengepumpten Halbleiterlasern umfaßt.

4. System nach Anspruch 1, **dadurch gekennzeichnet, dass** das Laserarray (LA) eine Anzahl von diodengepumpten Scheibenlasern umfaßt.

5. System nach Anspruch 1, **dadurch gekennzeichnet, dass** das Laserarray (LA) eine Anzahl von diodengepumpten Halbleiterscheibenlasern umfaßt.

6. System nach einem der vorangehenden Ansprüche, **dadurch gekennzeichnet, dass** ein das System einhausendes Gehäuse (G) vorhanden ist.

7. System nach einem der vorangehenden Ansprüche, **dadurch gekennzeichnet, dass** der Raumwinkel des Sichtfelds (SF) eines Flugkörperwarngeräts (F) etwa 90° beträgt.

8. System nach Anspruch 7, **dadurch gekennzeichnet, dass** das Wirkungsfeld (WF) des Laserarrays (LA) größer oder gleich dem Sichtfeld eines Flugkörperwarngeräts (F) ist.

9. System nach einem der vorangehenden Ansprüche, **dadurch gekennzeichnet, dass** eine Datenverarbeitungseinheit (DV) zur Steuerung der Raumrichtung der Sichtlinie des Laserarrays (LA) vorhanden ist.

10. System nach einem der vorangehenden Ansprüche, **dadurch gekennzeichnet, dass** das System an die Außenhaut eines Transportmittels angebracht ist.

11. System nach Anspruch 10, **dadurch gekennzeichnet, dass** Anschlüsse vorhanden sind zur Herstellung einer Strom (SV)- und/oder Datenversorgung mit dem Transportmittel.

12. Transportmittel mit mindestens einem System nach einem der vorangehenden Ansprüche 1-12.

## Claims

1. System for protection of vehicles (FL) against IR-guided missiles comprising missile warning appliances (F) and means (LA) for jamming the IR-guided missiles, the means (LA) being a laser diode array (LA) comprising a plurality of laser diodes and being coupled to the missile warning appliance (F) in order to jam the IR-guided missiles, **characterized in that** the laser diode array (LA) is fitted on a curved surface to a hinged bearing (GK), which is mounted by means of at least two shafts (A), the missile warning appliance (F) is aligned in predeterminable spatial directions.

2. System according to Claim 1, **characterized in that** the laser array (LA) comprises a number of laser diodes with a wavelength in the range from 2-5 µm.

3. System according to Claim 1, **characterized in that** the laser array (LA) comprises a number of diode-pumped semiconductor lasers.

4. System according to Claim 1, **characterized in that** the laser array (LA) comprises a number of diode-pumped wafer lasers.

5. System according to Claim 1, **characterized in that** the laser array (LA) comprises a number of diode-pumped semiconductor wafer lasers.

6. System according to one of the preceding claims, **characterized in that** a housing (G) which houses the system is provided.

7. System according to one of the preceding claims, **characterized in that** the spatial angle of the field of view (SF) of the missile warning appliance (F) is about 90°.

8. System according to Claim 7, **characterized in that** the effective field (WF) of the laser array (LA) is greater than or equal to the field of view of the missile warning appliance (F).

9. System according to one of the preceding claims, **characterized in that** a data processing unit (DV) is provided in order to control the spatial alignment of the line of sight of the laser array (LA).

10. System according to one of the preceding claims, **characterized in that** the system is fitted to the outer skin of a vehicle.

11. System according to Claim 10, **characterized in that** connections are provided for production of an electrical power supply (SV) and/or a data supply with the vehicle.

12. Vehicle with at least one system according to one of the preceding claims 1-12.

## Revendications

1. Système pour protéger des moyens de transport (FL) contre des objets volants guidés par infrarouge comprenant des appareils d'alerte d'objets volants (F) et un moyen (LA) pour perturber les objets volants guidés par infrarouge, le moyen (LA) étant un ensemble de diodes laser (LA) comprenant un certain nombre de diodes laser et étant couplé à l'appareil d'alerte d'objets volants (F), **caractérisé en ce que** l'ensemble de diodes laser (LA) est disposé sur une surface courbe montée sur une articulation (GK) à au moins deux axes (A) et que les appareils d'alerte d'objets volants (F) sont orientés dans des directions fixées de l'espace.

2. Système selon la revendication 1, **caractérisé en ce que** l'ensemble de lasers (LA) comprend un certain nombre de diodes laser dont la longueur d'ondes se situe dans la plage de 2 - 5 µm.

3. Système selon la revendication 1, **caractérisé en ce que** l'ensemble de lasers (LA) comprend un certain nombre de lasers semi-conducteurs pompés par des diodes.

4. Système selon la revendication 1, **caractérisé en ce que** l'ensemble de lasers (LA) comprend un certain nombre de lasers à disques pompés par des diodes.

5. Système selon la revendication 1, **caractérisé en ce que** l'ensemble de lasers (LA) comprend un certain nombre de lasers semi-conducteurs à disques pompés par des diodes.

6. Système selon une des revendications précédentes, **caractérisé en ce qu'**on dispose d'un boîtier (G) qui abrite le système.

7. Système selon une des revendications précédentes, **caractérisé en ce que** l'angle solide du champ de vision (SF) d'un appareil d'alerte d'objets volants (F) est de l'ordre de 90°.

8. Système selon la revendication 7, **caractérisé en ce que** le champ actif (WF) de l'ensemble de lasers (LA) est plus grand ou égal au champ de vision d'un appareil d'alerte d'objets volants (F).

9. Système selon une des revendications précédentes, **caractérisé en ce qu'**on dispose d'une unité de traitement de données (DV) pour la commande de la direction spatiale de la ligne de visée de l'ensemble de lasers (LA).

10. Système selon une des revendications précédentes, **caractérisé en ce que** le système peut être monté sur le revêtement d'un moyen de transport.

11. Système selon la revendication 10, **caractérisé en ce qu'**on dispose de raccordements pour établir une liaison d'alimentation électrique (SV) et/ou de données avec le moyen de transport.

12. Moyens de transport avec au bas mot une système selon une des revendications précédentes 1-12.
